# EUROPÄISCHE PATENTSCHRIFT

(11) **EP 3 061 962 B1**
(45) Veröffentlichungstag und Bekanntmachung des Hinweises auf die Patenterteilung: **18.04.2018**
(21) Anmeldenummer: 16156829.0
(22) Anmeldetag: 23.02.2016
(51) Int. Cl.: F02M 21/02, F02B 19/10

(54) **ZYLINDERKOPF**
CYLINDER HEAD
CULASSE DE CYLINDRE

(30) Priorität: 27.02.2015 AT 501602015
(43) Veröffentlichungstag der Anmeldung: 31.08.2016
(73) Patentinhaber: GE Jenbacher GmbH & Co OG, 6200 Jenbach (AT)
(72) Erfinder: Jacob, Raphael, 85276 Pfaffenhofen (Ilm) (DE)
(74) Vertreter: Torggler & Hofinger Patentanwälte

(56) Entgegenhaltungen:
- WO-A1-2004/099584
- DE-A1-102014 000 229
- JP-A- H04 171 256
- US-A- 3 406 667

## Beschreibung

Die vorliegende Erfindung betrifft einen Zylinderkopf mit den Merkmalen des Oberbegriffs von Anspruch 1 und eine Brennkraftmaschine mit einem solchen Zylinderkopf.

Gattungsgemäße Zylinderköpfe und Brennkraftmaschinen sind bereits aus dem Stand der Technik bekannt. Ab einer bestimmten Bohrung (in etwa 150 mm) werden (Gas-) Brennkraftmaschinen mit einer Vorkammer zur Zündverstärkung ausgestattet. Eine in die Vorkammer ragende Zündquelle entzündet das dort vorliegende, bei gespülter Vorkammer relativ fette Gemisch, wodurch Zündfackeln von der Vorkammer in einen Hauptbrennraum treten und das dort vorliegende Gemisch entzünden.

Die JP H04171256 A zeigt ein Ventil mit Ventilkörper, Ventilfeder, einer Ventilnadel und einem unteren gasbeaufschlagten Raum. Ebenso ist ein oberer Raum vorhanden, in dem die Ventilfeder angeordnet ist. Als Verschluss des oberen Ventilraumes dient hier eine Kappe, welche über den oberen Ventilraum gestülpt und verschraubt wird und dadurch erst den oberen Ventilraum ausbildet. Zündkerze und Vorkammergasventil sind gemeinsam in derselben Kavität angeordnet. Dies kann bei kleinen Bauweisen zu geringeren Stabilitäten führen.

In der DE 10 2004 000 229 A1 ist ein Einspritzsystem gezeigt, welches einerseits Gas als auch Diesel in den Brennraum einspritzt. Es ist keine gemeinsame Kavität von Zündkerze und Vorkammergasventil gezeigt.

Weitere aus dem Stand der Technik bekannte Ventile für Brennkraftmaschinen sind aus der US 3 406 667 A und der WO 2004/099584 A1 bekannt.

Zur Brennstoffversorgung von Vorkammern bestehen verschiedene Konzepte. Bei ungespülten Vorkammern wird im Verdichtungstakt Gemisch aus dem Hauptbrennraum in die Vorkammer gedrückt.

Bei gespülten Vorkammern besteht darüber hinaus die Möglichkeit, die Vorkammer zusätzlich mit Brennstoff zu versorgen. Diese separate Brennstoffversorgung wiederum kann über passive Ventile (Rückschlagventile) oder aktive Ventile geschehen.

Das Packaging, das heißt die räumliche Unterbringung der für ein gespültes Vorkammerkonzept erforderlichen Komponenten bzw. Versorgungsleitungen im Zylinderkopf ist anspruchsvoll. Um den Platzproblemen zu begegnen gibt es Ansätze, die Vorkammergasventile besonders klein zu gestalten. Dies bringt Probleme mit der Lebensdauer mit sich, da miniaturisierte Vorkammergasventile anfälliger für Verstopfen oder Verkleben der bewegbaren Teile sind.

Ein weiterer Vorschlag zur Anordnung von Vorkammergasventil und Zündkerzenhülse liegt darin, das Vorkammergasventil relativ weit von der Vorkammer beabstandet zu positionieren, wodurch sich ein langer Kanal vom Vorkammergasventil zur Einmündung desselben in die Vorkammer ergibt. Dies kann deswegen nachteilig sein, weil dadurch ein großes ungespültes Volumen, ein sogenannter Schadraum, entsteht, welches deutlich zur Rußbildung bei der Vorkammergasverbrennung beiträgt.

Aufgabe der vorliegenden Erfindung ist es daher einen Zylinderkopf und eine Brennkraftmaschine anzugeben, in der die aus dem Stand der Technik bekannten Nachteile gemindert werden.

Gelöst wird diese Aufgabe durch einen Zylinderkopf mit den Merkmalen von Anspruch 1 und eine Brennkraftmaschine mit einem solchen Zylinderkopf. Vorteilhafte Ausführungsformen sind in den abhängigen Ansprüchen angegeben.

Indem die Zündkerze und das Vorkammergasventil in einer gemeinsamen Kavität des Zylinderkopfes angeordnet sind, wird eine besonders kompakte Anordnung von Vorkammergasventil und Schacht zur Aufnahme der Zündkerze realisiert. Es kann vorgesehen sein, dass sich die Kavität auch aus mehreren zylindrischen Abschnitten zusammensetzt. Diese müssen nicht alle parallel zueinander stehen.

Erfindungsgemäß ist vorgesehen, dass die Zündkerze und das Vorkammergasventil in parallelen Bohrungen angeordnet sind, welche einander im oberen Bereich mit dem größten Durchmesser durchdringen. Damit ist der Fall erfasst, bei dem die Bohrungen zur Aufnahme von Zündkerze bzw. Vorkammergasventil räumlich so zueinander stehen, dass sich die Bohrungen durchdringen. Dadurch können Zündkerze und Vorkammergasventil besonders nahe aneinander positioniert werden. Dies ist so zu verstehen, dass sich die Bohrungen zur Aufnahme der Zündkerze und zur Aufnahme des Vorkammergasventils mit ihren Mantelflächen durchschneiden, was zu einer höheren Stabilität des Ventilkörpers, besonders bei kleinen Baugrößen, führt.

Bevorzugt ist vorgesehen, dass die Kavität in der Zündkerzenhülse vorgesehen ist.
Gattungsgemäße Brennkraftmaschinen sind meist so konstruiert, dass die Zündkerze nicht direkt in den Zylinderkopf geschraubt wird, sondern eine Zündkerzenhülse zur Aufnahme der Zündkerze vorgesehen ist.
Die bevorzugte Ausführungsform sieht also vor, dass die gemeinsame Kavität zur Aufnahme von Zündkerze und Vorkammergasventil in der Zündkerzenhülse ausgebildet ist.

Es kann vorgesehen sein, dass die Dichtung des Vorkammergasventils gegenüber dem Zylinderkopf bzw. der Zündkerzenhülse über den Umfang des Vorkammergasventils erfolgt. Es wird also als bevorzugtes Ausführungsbeispiel ein radiales Dichtungskonzept vorgeschlagen, bei welchem die Dichtung des Vorkammergasventils über eine Mantelfläche des Vorkammergasventils erfolgt. Dies steht im Gegensatz zu axialen Dichtkonzepten, bei denen die Dichtung über eine Stirnfläche des Vorkammergasventils erfolgt.
Dabei kann vorgesehen sein, dass die Dichtung des Vorkammergasventils über wenigstens einen O-Ring ausgebildet ist.

Bevorzugt ist vorgesehen, dass der wenigstens eine O-Ring in einer von an der Außenwandung des Vorkammergasventils ausgebildeten Vorsprüngen gebildeten Ausnehmung angeordnet ist. Im Gegensatz zu Nuten in der Wandung des Vorkammergasventils ist also vorgesehen, dass Vorsprünge an der Wandung des Vorkammergasventils ausgebildet sind. Zwischen diesen vorzugsweise umfänglich verlaufenden Vorsprüngen wird eine Ausnehmung ausgebildet, die einen O-Ring aufnehmen kann. Ist mehr als ein O-Ring vorgesehen, so werden demensprechend mehr Vorsprünge ausgebildet.

Vorteile der vorliegenden Erfindung sind insbesondere:
- Das Vorkammgasventil liegt nahe an der Vorkammer, wodurch der Schadraum minimiert wird
- Das Vorkammgasventil liegt nahe an der Zündkerze - besonders kompakte Bauweise
- Erfindung ist auch bei kleineren Brennkraftmaschinen anwendbar (speziell dort ist Packaging problematisch)
- Strömungs- und verbrennungstechnisch günstige mittige Lage der Zündkerze
- Austauschbarkeit der Zündkerze bei montiertem Vorkammergasventil

Die Erfindung wird durch die Figuren näher erläutert. Dabei zeigt:
- Fig. 1a bis 1c: Eine Zündkerzenhülse nach einem ersten Ausführungsbeispiel,
- Fig. 2a bis 2c: Eine Zündkerzenhülse nach einem weiteren Ausführungsbeispiel,
- Fig. 3a bis 3e: Eine Zündkerzenhülse, Details zu Gaszufuhrkonzept
- Fig. 4a, 4b: ein Vorkammergasventil und eine Variante hierzu und
- Fig. 5: eine Situation gemäß Figur 1a mit eingetragener Zündkerze.

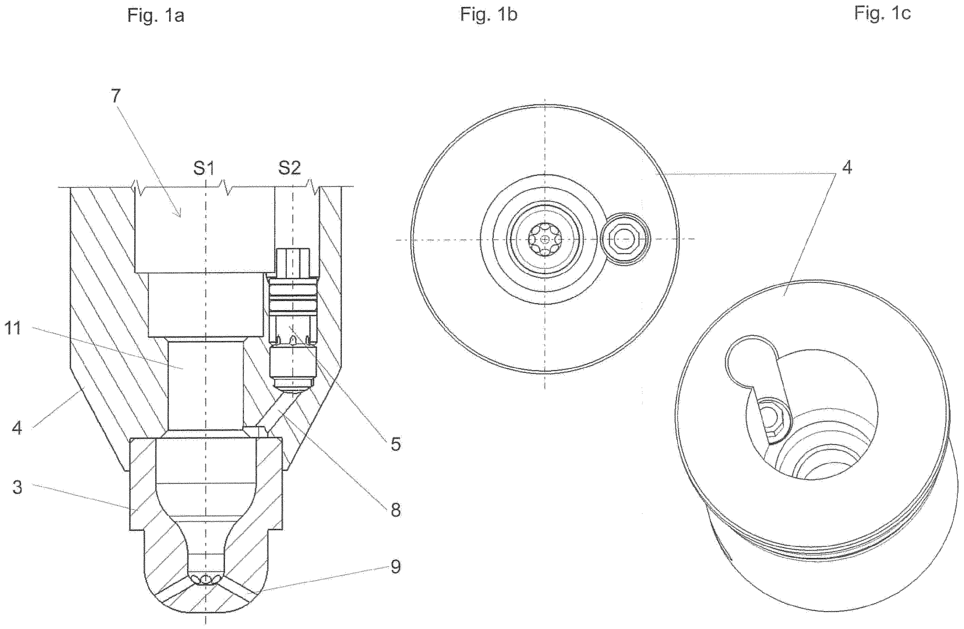

Figuren 1a bis 1c zeigen eine Zündkerzenhülse 4 nach einem ersten Ausführungsbeispiel in drei Ansichten. So zeigt Fig. 1a einen Längsschnitt durch die Kavität 7, welche eine Zündkerze 6 (nicht gezeigt) und ein Vorkammergasventil 5 aufnimmt. Die Kavität 7 ist in diesem Ausführungsbeispiel in einer Zündkerzenhülse 4 ausgebildet.
Die Kavität 7 umfasst einerseits einen um die Symmetrieachse S1 konzentrischen Schacht aus Zylinderabschnitten zur Aufnahme einer Zündkerze.
Die Kavität 7 weist weiters eine Bohrung 10 mit Symmetrieachse S2 zur Aufnahme eines Vorkammergasventils 5 auf.
Vom Vorkammergasventil 5 führt ein Kanal 8 zur Vorkammer 3. Die Vorkammer 3 besteht einerseits aus der eigentlichen Kavität, also dem Hohlraum, in dem die Entflammung von Gemisch stattfindet. Die Vorkammer 3 ist freilich auch ein physisches Bauteil. In der vorliegenden Ausführungsform ist die Vorkammer 3 als ein der Zündkerzenhülse 4 separates Bauteil ausgeführt und wird mit der Zündkerzenhülse 4 verbunden, beispielsweise verpresst.

Die der Übersichtlichkeit halber nicht gezeigte Zündkerze 6 wird über den zur Symmetrieachse S1 konzentrischen Schacht in die Zündkerzenhülse 4 so eingeführt, dass sie mit der Vorkammer 3 vorzugsweise bündig abschließt und ihre Elektrode(n) in die Vorkammer 3 ragen. Die Vorkammer 3 wird vom Vorkammergasventil 5 über den Kanal 8 mit Brenngas angereichert. Nach der Zündung in der Vorkammer 3 tritt entflammtes Gemisch über die Überströmbohrungen 9 in den Hauptbrennraum (nicht gezeigt).

Fig. 1b zeigt eine Draufsicht der Darstellung von Fig. 1a. Zu erkennen sind die innerhalb der Kavität 7 liegenden parallelen zylindrischen Schächte zur Aufnahme einer Zündkerze 6 sowie eines Vorkammergasventils 5. Die Zündkerze 6 ist wie anhand der Fig. 1a erläutert nicht gezeigt. Beim Vorkammergasventil 5 zu erkennen ist ein Achtkant, mit dem das Vorkammergasventil 5 in die Zündkerzenhülse 4 eingeschraubt wird.

Fig. 1c zeigt eine perspektivische Ansicht der Zündkerzenhülse 4 dieses Ausführungsbeispiels.

Die Zündkerzenhülse 4 ist im Einbauzustand in einen Zylinderkopf 2 einer Brennkraftmaschine (hier nicht gezeigt) eingesetzt.
In diesem Ausführungsbeispiel umfasst der größte Durchmesser der Kavität 7, die Bohrung des Vorkammergasventils 5 nicht mehr zur Gänze. Vielmehr durchdringt die Bohrung 10 des Vorkammergasventils 5 die Zündkerzenbohrung 11 im deren oberem Abschnitt mit dem größten Durchmesser. Dies wird besonders deutlich in den Darstellungen von Figur 1b und Figur1. In einer Draufsicht (Figur 1b) überlappen also die Bohrung 10 zur Aufnahme des Vorkammergasventils 5 und die Bohrung zur Aufnahme der Zündkerze 6.

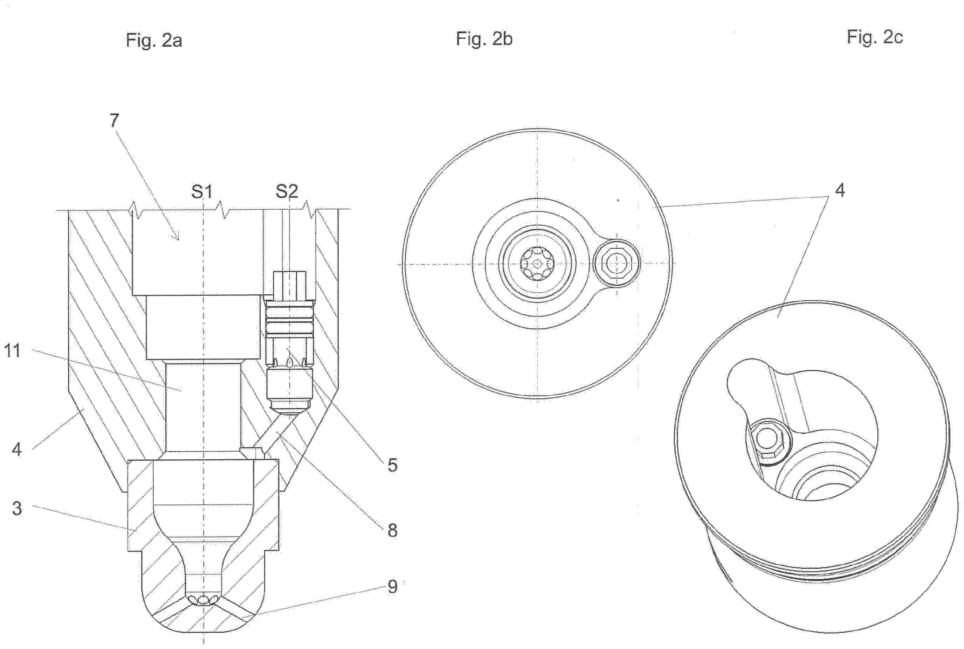

Figuren 2a bis 2c zeigen ein weiteres Ausführungsbeispiel einer Zündkerzenhülse 4, welche in einen Zylinderkopf 2 einer Brennkraftmaschine einsetzbar ist. Hier durchdringen sich die Bohrungen zur Aufnahme einer Zündkerze 6 und zur Aufnahme des Vorkammergasventils 5. Im Vergleich zu dem Ausführungsbeispiel nach Figuren 1a bis 1c ist hier die Kontur der Kavität 7 verändert. Die Kontur der Kavität 7 ist hier so ausgestaltet, dass die zylindrischen Bohrungen zur Aufnahme der Zündkerze 6 und des Vorkammergasventils 5 fließend ineinander übergehen. In anderen Worten sind die scharfen Übergänge des Ausführungsbeispiels nach Figuren 1a bis 1c hier durch einen sanften Radius im Übergang der zwei Bohrungen ersetzt.

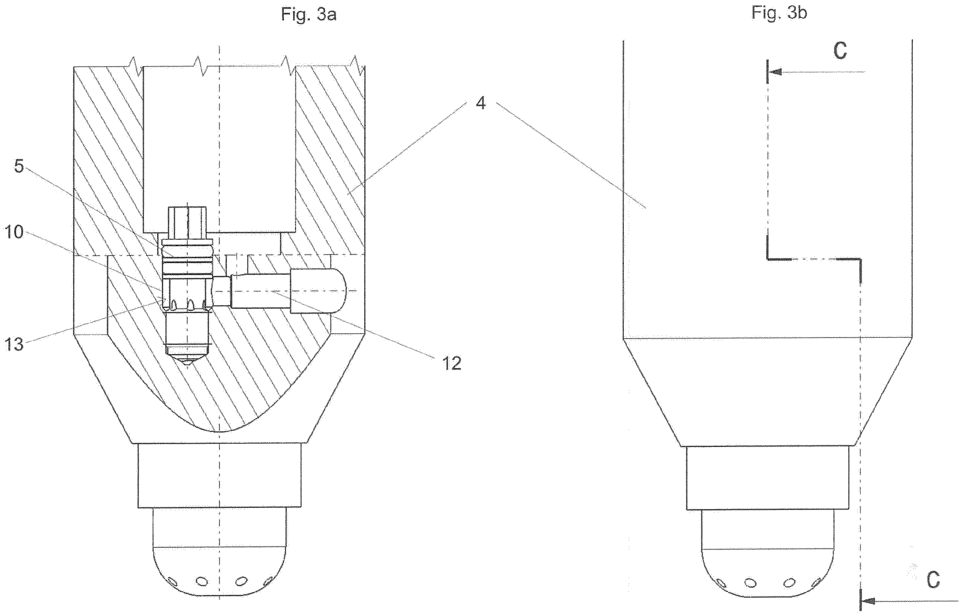

Fig. 3a zeigt einen Schnitt durch eine Zündkerzenhülse 4, wobei der Schnitt solchermaßen gelegt wurde, dass die Gaszuführung an das Vorkammergasventil 5 deutlich wird. Die Schnittführung ist in Fig. 3b skizziert. Zu erkennen ist der Gaszufuhrkanal 12, wie er in die das Vorkammergasventil 5 tragende Bohrung 10 mündet. Die Bohrung 10 bildet zusammen mit dem Vorkammergasventil 5 einen Ringkanal 13, in welchen der Gaszufuhrkanal 12 mündet. Aus dem von Bohrung 10 und Vorkammergasventil 5 gebildeten Ringkanal 13 wird das einströmende Gas gleichmäßig in das Vorkammergasventil 5 geleitet.

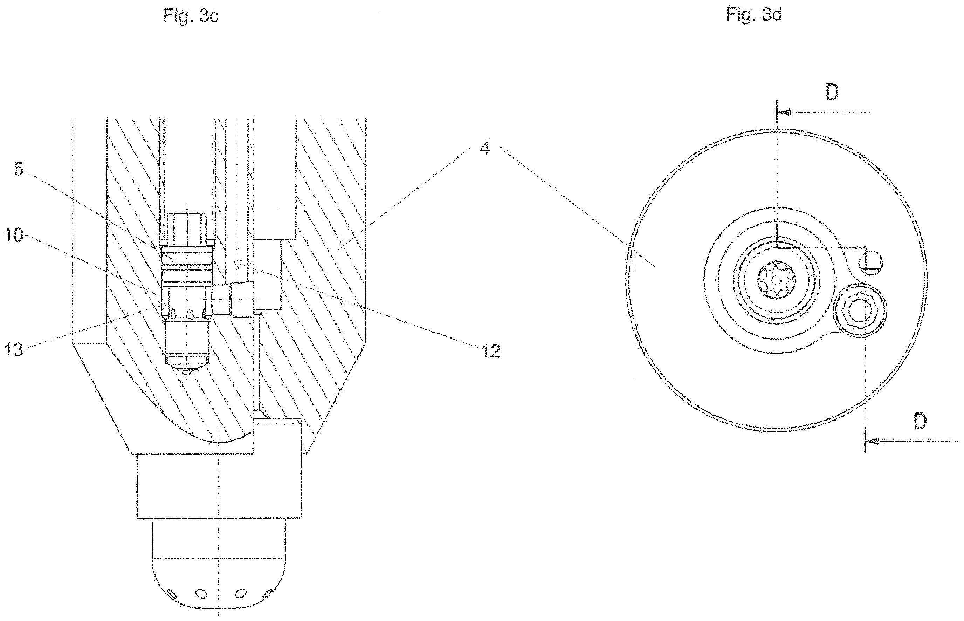

Fig. 3c zeigt einen Längsschnitt durch die Zündkerzenhülse 4. Die Schnittführung geht aus der Fig. 3d hervor. Wie in Fig. 3c ersichtlich, die Schnittführung ist hier so gewählt, dass auch der parallel zur Symmetrieachse S1 verlaufende Teil des Gaszufuhrkanals 12 erkennbar ist.

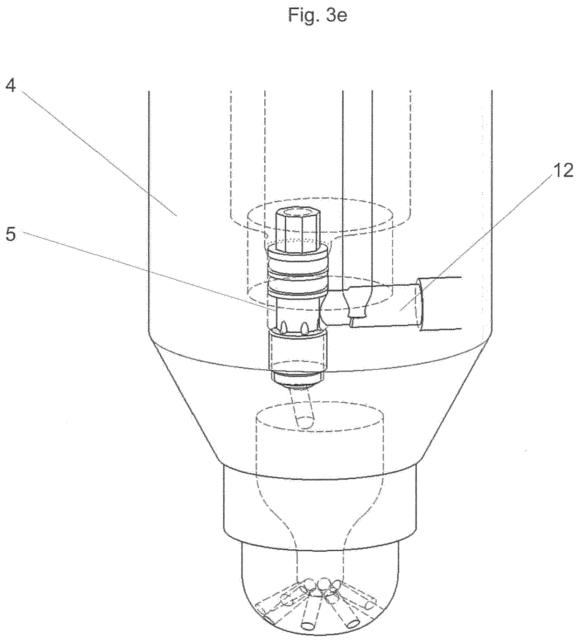

Fig. 3e zeigt in einer perspektivischen, isometrischen Ansicht die Anordnung von Vorkammergasventil 5 und dessen Gasversorgung. Die Gasversorgung erfolgt durch den horizontalen und den vertikalen Abschnitt des Gaszufuhrkanales 12.

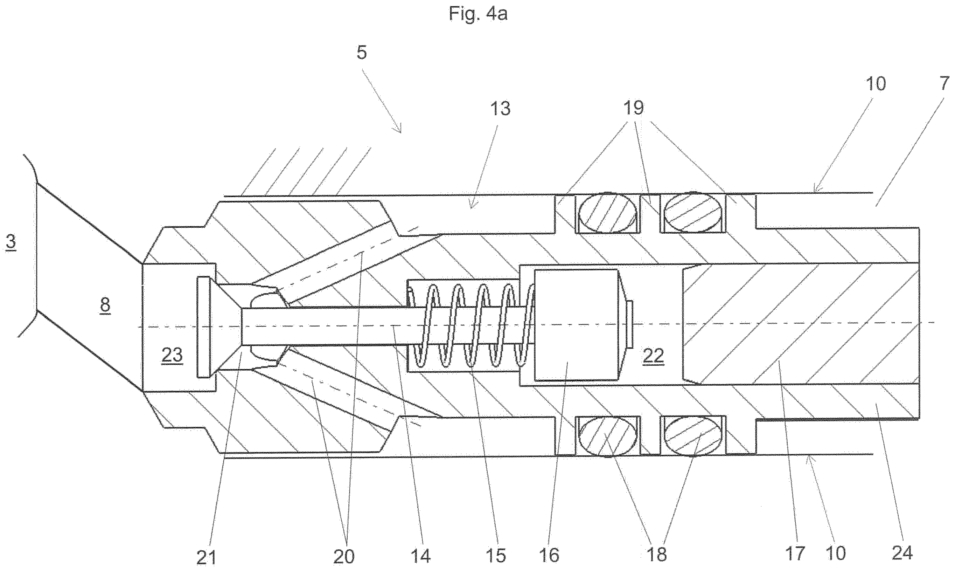

Fig. 4a zeigt eine Schnittdarstellung des Vorkammergasventiles 5. Gut erkennbar ist der Ringkanal 13, der zwischen der Wandung 10 der Kavität und der Außenkontur des Vorkammergasventils 5 gebildet ist. Die Wandung 10 kann entweder von dem Zylinderkopf 2 selbst gebildet sein oder von einer in den Zylinderkopf 2 eingesetzten Zündkerzenhülse 4.

Die Ventilnadel 14 wird von der Feder 15 gegen ihren Sitz verspannt. Die Kappe 16 umgreift die Feder 15 und ist mit der Ventilnadel 14 beispielsweise über eine Strahlschweißung verbunden.
Der Stopfen 17 verschließt und dichtet das Vorkammergasventil 5 nach oben hin ab.

Die Dichtung des Ringkanals 13 gegenüber der Kavität 7 erfolgt radial über die O-Ringe 18. Diese sind in von den Vorsprüngen 19 gebildeten, ringförmigen Aufnahmen angeordnet. Das Dichtkonzept des hier gezeigten Vorkammergasventils 5 sieht also vor, dass die Dichtung des Vorkammergasventils 5 radial, d. h. über die Außenfläche des Vorkammergasventils 5 erfolgt.

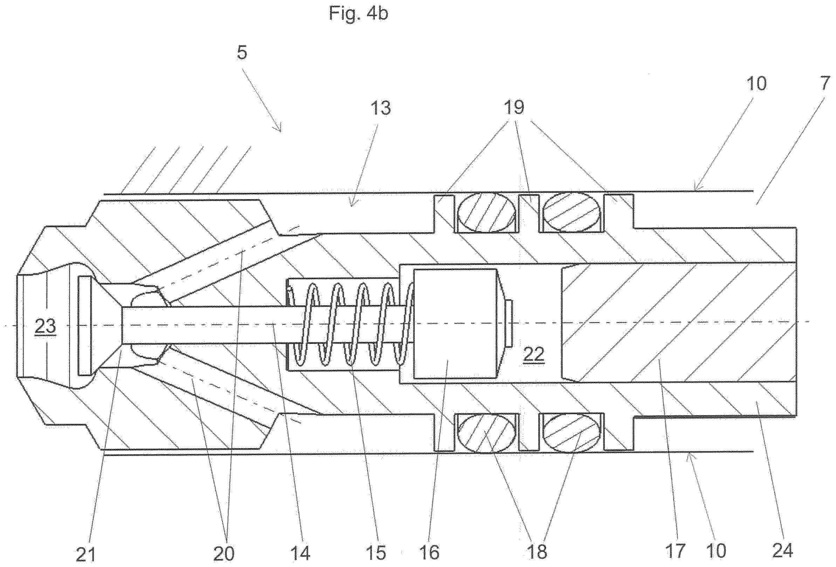

Fig. 4b zeigt eine Variante zu Figur 4a, in welcher der Raum 23 eine weitestgehend birnenförmige, sich zur Vorkammer 3 hin verjüngende Gestalt aufweist. Diese Ausgestaltung ist strömungstechnisch besonders vorteilhaft.

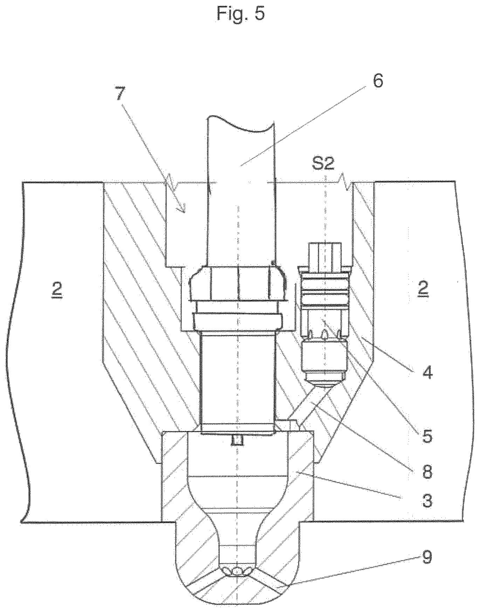

Figur 5 zeigt eine Darstellung gemäß Figur 1a, hier mit eingezeichneter Zündkerze 6.

### Liste der verwendeten Bezugszeichen:

- 2: Zylinderkopf
- 3: Vorkammer
- 4: Zündkerzenhülse
- 5: Vorkammergasventil
- 6: Zündkerze
- 7: Kavität
- 8: Kanal
- 9: Überströmbohrung
- 10: Wandung der Kavität 7
- 11: Zündkerzenbohrung
- 12: Gaszufuhrkanal
- 13: Ringkanal
- 14: Ventilnadel
- 15: Ventilfeder
- 16: Kappe
- 17: Stopfen
- 18: O-Ring
- 19: Vorsprung
- 20: Gaskanal
- 21: Untere Kavität des Vorkammergasventils
- 22: Obere Kavität des Vorkammergasventils
- 23: Raum
- 24: Ventilkörper
- S1: Symmetrieachse
- S2: Symmetrieachse

## Patentansprüche

1. Zylinderkopf (2) umfassend
- wenigstens eine Vorkammer (3),
- wenigstens eine, in die Vorkammer (3) ragende Zündkerze (6),
- wenigstens ein, in die Vorkammer (3) mündendes Vorkammergasventil (5),
wobei die Zündkerze (6) und das Vorkammergasventil (5) in einer gemeinsamen Kavität (7) des Zylinderkopfes (2) angeordnet sind, **dadurch gekennzeichnet, dass** die Zündkerze (6) und das Vorkammergasventil (5) in parallelen Bohrungen angeordnet sind, welche einander in deren oberen Abschnitten mit den größten Durchmessern durchdringen.

2. Zylinderkopf nach Anspruch 1, wobei die Zündkerze (6) in einer Zündkerzenhülse (4) angeordnet ist, **dadurch gekennzeichnet, dass** die Kavität (7) in der Zündkerzenhülse (4) vorgesehen ist.

3. Zylinderkopf nach wenigstens einem der vorangegangenen Ansprüche, **dadurch gekennzeichnet, dass** die Dichtung des Vorkammergasventils (5) gegenüber dem Zylinderkopf (2) bzw. der Zündkerzenhülse (4) über den Umfang des Vorkammergasventils (5) erfolgt.

4. Zylinderkopf nach Anspruch 3, **dadurch gekennzeichnet, dass** die Dichtung des Vorkammergasventils (5) über wenigstens einen O-Ring (18) ausgebildet ist.

5. Zylinderkopf nach Anspruch 4, **dadurch gekennzeichnet, dass** der wenigstens eine O-Ring (18) in einer von an der Außenwandung des Vorkammergasventils (5) ausgebildeten Vorsprüngen (19) gebildeten Ausnehmung angeordnet ist.

6. Brennkraftmaschine mit einem Zylinderkopf (2) nach wenigstens einem der Ansprüche 1 bis 5.

## Claims

1. A cylinder head (2) comprising
- at least one pre-chamber (3),
- at least one spark plug (6) projecting into the pre-chamber (3), and
- at least one pre-chamber gas valve (5) opening into the pre-chamber (3),
wherein the spark plug (6) and the pre-chamber gas valve (5) are arranged in a common cavity (7) of the cylinder head (2), **characterized in that** the pre-chamber gas valve (5) and the spark plug (6) are arranged in parallel bores which mutually pass through each other in the upper portion with the largest diameters.

2. A cylinder head as set forth in claim 1 wherein the spark plug (6) is arranged in a spark plug sleeve (4), **characterised in that** the cavity (7) is provided in the spark plug sleeve (4).

3. A cylinder head as set forth in at least one of the preceding claims **characterised in that** sealing of the pre-chamber gas valve (5) relative to the cylinder head (2) or the spark plug sleeve (4) is effected over the periphery of the pre-chamber gas valve (5).

4. A cylinder head as set forth in claim 3 **characterised in that** sealing of the pre-chamber gas valve (5) is by way of at least one O-ring (18).

5. A cylinder head as set forth in claim 4 **characterised in that** the at least one O-ring (18) is arranged in an opening formed by projections (19) at the outside wall of the pre-chamber gas valve (5).

6. An internal combustion engine having a cylinder head (2) as set forth in at least one of claims 1 through 5.

## Revendications

1. Culasse (2), comprenant
- au moins une préchambre (3),
- au moins une bougie d'allumage (6) dépassant dans la préchambre (3),
- au moins une soupape à gaz de préchambre (5) débouchant dans la préchambre (3),
la bougie d'allumage (6) et la soupape à gaz de préchambre (5) étant disposées dans une cavité (7) commune de la culasse (2), **caractérisée en ce que** la bougie d'allumage (6) et la soupape à gaz de préchambre (5) sont disposées dans des alésages parallèles qui s'interpénètrent dans leurs tronçons supérieurs dotés des plus grands diamètres.

2. Culasse selon la revendication 1, la bougie d'allumage (6) étant disposée dans une douille de bougie d'allumage (4), **caractérisée en ce que** la cavité (7) est prévue dans la douille de bougie d'allumage (4).

3. Culasse selon au moins l'une des revendications précédentes, **caractérisée en ce que** l'étanchéité de la soupape à gaz de préchambre (5) vis-à-vis de la culasse (2) ou de la douille de bougie d'allumage (4) s'effectue sur la périphérie de la soupape à gaz de préchambre (5).

4. Culasse selon la revendication 3, **caractérisée en ce que** l'étanchéité de la soupape à gaz de préchambre (5) est constituée par au moins un joint torique (18).

5. Culasse selon la revendication 4, **caractérisée en ce que** le joint torique (18) au moins au nombre d'un est disposé dans un creux formé de saillies (19) constituées sur la paroi extérieure de la soupape à gaz de préchambre (5).

6. Moteur à combustion interne avec une culasse (2) selon au moins l'une des revendications 1 à 5.
